# EUROPEAN PATENT SPECIFICATION

(11) **EP 1 878 620 B1**
(45) Date of publication and mention of the grant of the patent: **03.12.2008**
(21) Application number: 07013419.2
(22) Date of filing: 09.07.2007
(51) Int. Cl.: B60R 19/18, F16F 7/12

(54) **Vehicle bumper assembly**
Stoßfängeranordnung für ein Fahrzeug
Assemblage de pare-choc de véhicule

(30) Priority: 11.07.2006 US 484141
(43) Date of publication of application: 16.01.2008
(73) Proprietor: Honda Motor Co., Ltd., Tokyo 107-8556 (JP)
(72) Inventor: Boggess, Brian, Raymond Ohio 43067 (US)
(74) Representative: Liska, Horst

(56) References cited:
- EP-A1- 0 983 909
- EP-A2- 0 955 227
- DE-A1- 19 604 213
- FR-A1- 2 822 115
- US-A- 4 597 601
- US-A- 5 680 886

## Description

### BACKGROUND

The present disclosure generally relates to a vehicle bumper assembly according to the preamble of claim 1.
A vehicle bumper assembly according to the preamble of claim 1 is known from US-A-4 597 601. In one embodiment, the vehicle bumper assembly includes a bumper beam extending laterally across a front or rear of the vehicle connecting frame rails of the vehicle and further includes a hollow tubular corrugated absorber secured to the bumper beam on an opposite side relative to the frame rails, e.g., between the bumper beam and a fascia or wall defining the body of the vehicle. The improved vehicle bumper assembly will be described with a particular reference to this embodiment, but it is to be appreciated that the vehicle bumper assembly is also amenable to like applications.

Prior art bumper assemblies are known to include a rigid bumper beam extending laterally across the vehicle in which the bumper assembly is deployed. The bumper beam is usually provided at either a forward end of the vehicle to absorb a front end collision or a rearward end of the vehicle to absorb a rear end collision. Typically, the bumper beam is held in its forward or rearward position by the vehicle's longitudinally extending frame rails. Aluminum, including extruded aluminum, and steel are favored materials for use in forming bumper beams, and one favored shape for a bumper beam is a hollow, closed-profile B-shape.

Many bumper assemblies further include a shock absorber secured or mounted to the bumper beam on an outside surface or side thereof. For example, the absorber is positioned forward of a front bumper beam and rearward of a rear bumper beam (in either case, the absorber is usually positioned on an opposite side of the bumper than the frame rails). Shock absorbers can be included for the purpose of absorbing energy otherwise imparted to a pedestrian during a vehicle/pedestrian collision, which is sometimes required for a vehicle to meet pedestrian lower leg requirements. Many such absorbers are formed of a polymer or foam having a solid or uniform profile. A body member or bumper fascia can be employed to cover the bumper assembly.

One drawback of these types of absorbers is the high manufacturing costs associated with forming the molded absorber and/or installing the molded absorber on a vehicle. For example, the molding process can be costly and mounting the molded absorber to the bumper beam can be difficult. There is also the potential for density inconsistencies or imperfections resulting from the molding process which can adversely impact the performance of the absorber, particularly along the length of the absorber. Another drawback associated with polymer or foam absorbers is that performance of the absorber can be hindered when extreme temperature conditions are encountered. Another general concern with any bumper assembly is its overall weight and any reduction thereof that can be achieved without comprising safety is considered desirable.

### SUMMARY

According to one aspect, a vehicle bumper assembly is provided. More particularly, in accordance with this aspect, the vehicle bumper assembly includes a bumper beam extending laterally across a vehicle at one end of the vehicle and a tubular absorber having a closed hollow profile including at least one wall formed of a corrugated layer. The tubular absorber is mounted to and extends along the bumper beam on an outer side thereof.

According to another aspect, a vehicle bumper assembly is provided. More particularly, in accordance with this aspect, the vehicle bumper assembly includes a bumper beam connected to one end of a pair of spaced apart vehicle frame rails. A corrugated tubular absorber has a closed hollow profile and extends longitudinally adjacent and along the bumper beam. The absorber has at least a corrugated metal foil layer.

According to still another aspect, a vehicle bumper assembly mounted to frame rails of a vehicle on the front or rear end of the vehicle is provided. More particularly, in accordance with this aspect, the bumper assembly includes a bumper beam extending laterally across the vehicle and an energy absorbing tube disposed on an outer face of the bumper beam for absorbing energy when the tube is deformed due to an impact force. The energy absorbing tube has a longitudinal length that extends longitudinally along the outer face of the bumper beam and includes a corrugated metal foil layer.

### BRIEF DESCRIPTION OF THE DRAWINGS

FIGURE 1 is a partial cross-sectional view showing a prior art vehicle bumper assembly disposed at a forward end of a vehicle.

FIGURE 2 is partial cross-sectional view of an improved vehicle bumper assembly including a hollow, tubular corrugated absorber mounted to a laterally extending bumper beam.

FIGURE 3A is an enlarged partial cross-sectional view of one wall of the tubular corrugated absorber of FIGURE 2.

FIGURE 3B is an enlarged partial cross-sectional view of an alternative construction of the wall of FIGURE 3A.

FIGURE 4A is an exploded perspective view showing a mounting arrangement of the tubular corrugated absorber of FIGURE 2 to the bumper beam.

FIGURE 4B is an exploded perspective view showing a mounting arrangement of a tubular corrugated absorber having the alternate wall construction of FIGURE 3B to the bumper beam.

FIGURE 5 is a partial cross-sectional view showing a vehicle bumper assembly according to a first alternate embodiment.

FIGURE 6 is partial perspective view of a vehicle bumper assembly according to a second alternate embodiment.

FIGURE 7 is a partial perspective view of a vehicle bumper assembly according to a third alternate embodiment.

FIGURE 8 is a partial perspective view of a vehicle bumper assembly according to a fourth alternate embodiment.

FIGURE 9 is a partial perspective view of a vehicle bumper assembly according to a fifth alternate embodiment.

FIGURE 10 is a partial perspective view of a vehicle bumper assembly according to a sixth alternate embodiment.

FIGURE 11 is a partial perspective view of a vehicle bumper assembly according to a seventh alternate embodiment.

FIGURE 12 is a partial perspective view of a vehicle bumper assembly according to an eighth alternate embodiment.

FIGURE 13 is an exploded perspective view showing a mounting arrangement of a plurality of tubular corrugated absorbers to a bumper beam in a vehicle bumper assembly according to a ninth alternate embodiment.

### DETAILED DESCRIPTION

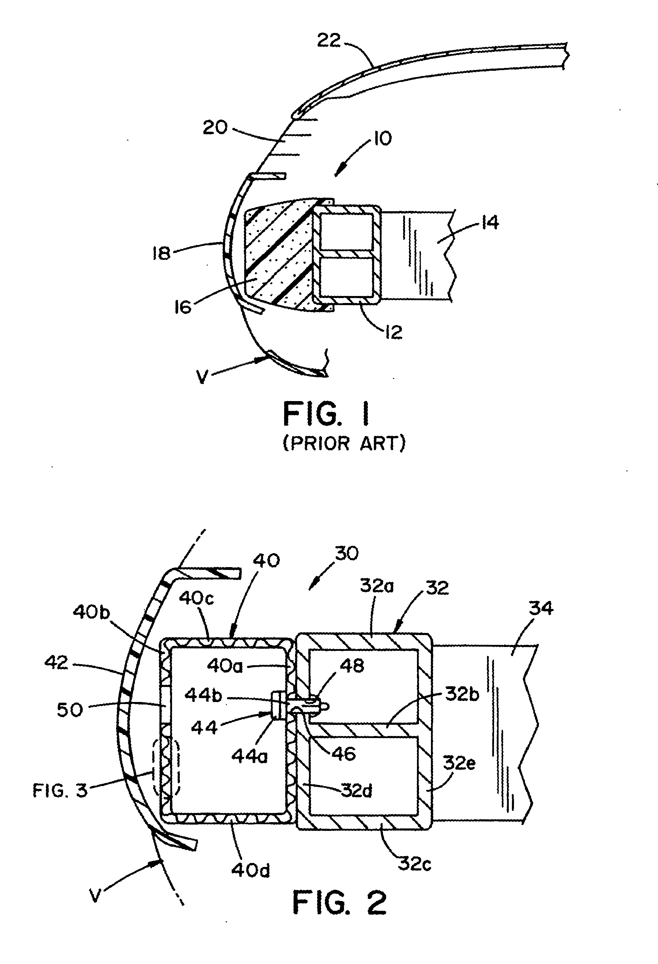

Referring now the drawings wherein the showings are for the purposes of showing one or more exemplary embodiments, FIGURE 1 depicts a prior art vehicle bumper assembly 10 positioned at the forward end of a vehicle V. The prior art vehicle bumper assembly 10 includes a bumper beam 12 extending laterally across the vehicle V at the forward end of the vehicle V in FIGURE 1. As is known and understood by those skilled in the art, the bumper beam 12 is secured to a pair of spaced apart frame rails 14 (only one shown in FIGURE 1) extending longitudinally along the vehicle V. The bumper beam 12 can be formed of steel or aluminum, and in one example is formed of extruded aluminum which enables the bumper beam to employ the illustrated hollow profile.

More particularly, in the illustrated prior art bumper assembly 10, the bumper beam 12 has a tubular design and is formed generally with a "B" shape. For purposes of limiting injury to pedestrians in the event of a collision with the vehicle V, a shock-absorber 16 is positioned forward of the bumper beam 12 and frame rails 14 and is secured to the bumper beam 12 for absorbing energy otherwise imparted to the pedestrian in the event of a pedestrian accident. As is well known to those skilled in the art, the absorber 16 can be formed of a polymer or foam, or any other suitable cushioning material. The absorber 16 can have a generally solid or uniform profile or can be a partially hollow plastic injection molded part. As illustrated, the shock-absorber 16 can be specifically positioned between the bumper beam 12 and a bumper fascia 18 provided on an exterior of the vehicle immediately below vehicle air intake or grill 20 which is disposed adjacent a forward end of hood 22.

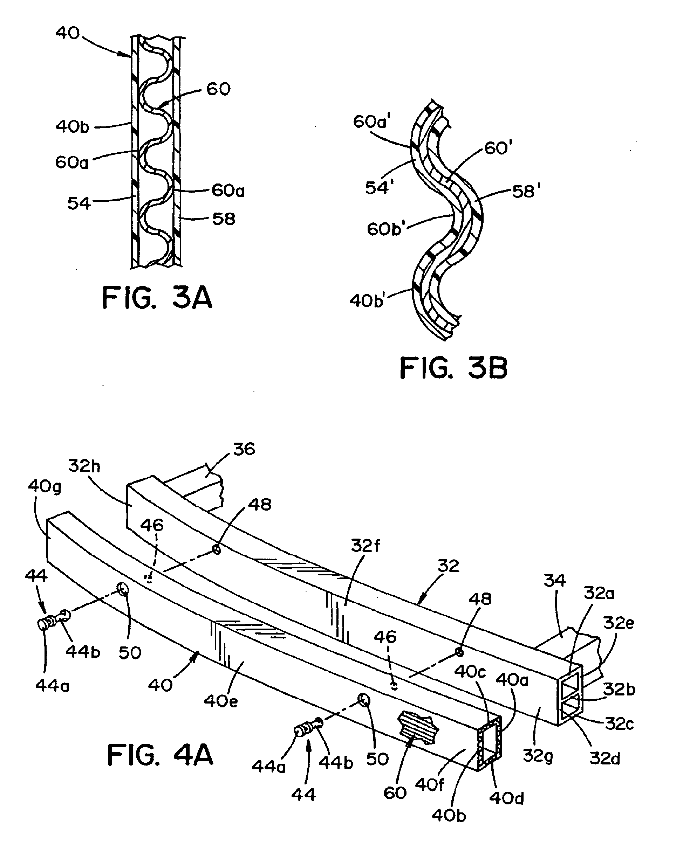

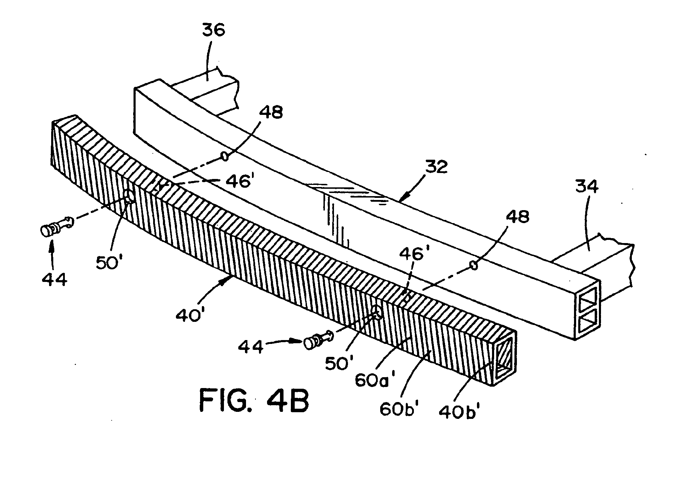

With reference now to FIGURE 2, an improved vehicle bumper assembly 30 is illustrated in accordance with one exemplary embodiment. Like the prior art vehicle bumper assembly 10, the improved vehicle bumper assembly 30 includes a bumper beam 32 extending laterally across a vehicle V at one end of the vehicle (e.g., a front end or a rear end of the vehicle). The bumper beam 32 connects a pair of spaced frame rails 34,36 (frame rail 36 illustrated in FIGURE 4). As is known and understood by those skilled in the art, the frame rails 34,36 extend longitudinally along a vehicle within which the bumper beam 32 and frame rails 34,36 are included. The bumper beam 32 can be formed of any suitable material, such as steel or aluminum. In the illustrated embodiment, the bumper beam 32 is a hollow structure having a hollow, closed profile formed of extruded aluminum in the shape of a "B".

More particularly, the illustrated bumper beam 32 has a closed cross-section having an upper wall 32a, a middle wall 32b, and a bottom wall 32c. The walls 32a-c are spaced apart from one another in generally horizontal planes, generally parallel to the direction in which the frame rails 34,36 extend. The bumper beam 32 further includes walls 32d and 32e which are spaced apart from one another in generally vertical planes and are attached to ends of the walls 32a-c to give the bumper beam 32 its B-shape. With brief reference to FIGURE 4A, it is to be appreciated that the bumper beam 32 having the hollow B-shaped configuration can be formed as a slightly curved structure (i.e., having a horizontal or longitudinally extending curvature) in such a manner that a center portion 32f provided between the frame rails 34, 36 is spaced forwardly relative to end portions 32g, 32h which are formed outwardly relative to the frame rails. As with the prior art vehicle bumper assembly 10, the bumper beam 32 of the vehicle bumper assembly 30 can be secured to the frame rails 34, 36 in any conventional manner as will be known and understood by those skilled in the art and therefore is not described in further detail herein. In one embodiment (not shown), the bumper beam 32 includes spaced apart flanges that overlap the frame rails 34,36 and allow threaded or bolted connections with the frame rails.

Returning reference to FIGURE 2, a corrugated tubular absorber 40 having a closed hollow profile is secured to the bumper beam 32 on a side of the bumper beam opposite the frame rails 34,36 (i.e., the side defined by bumper beam wall 32d). Thus, the absorber 40, alternatively referred to herein as an energy absorbing tube, can be said to extend along or be longitudinally adjacent the bumper beam 32 on an outer side (e.g., against a front face) of the bumper beam 32 (i.e., a length of the absorber 40 extends in adjacent relation to the bumper beam 32). In particular, the absorber 40 is disposed between the bumper beam 32 and a bumper fascia 42, the fascia forming a portion of a vehicle body, i.e., a portion of a vehicle exterior. As is known and understood by those skilled in the art, the fascia 42 can be clipped to a body of the vehicle V to cover the beam 32 and the absorber 40. The absorber 40 can be secured to the bumper beam 32 through any conventional means or by any conventional mounting arrangement, as will be understood and appreciated by those skilled in the art.

In the illustrated vehicle bumper assembly 30, the absorber 40 is secured or mounted to the bumper beam 32 by a plurality of fasteners 44 (only one shown in FIGURE 2). In particular, each of the fasteners 44 can be a clip adapted to secure the absorber 40 to the bumper beam 32 blindly (i.e., without the need to access the clip from the blind side, such as may be required with a bolt and nut type connection). Each of the blind fastener clips 44 of the illustrated embodiment includes a head portion 44a and a shaft portion 44b which is received through an aperture 46 defined in a mounting wall 40a of the absorber and an aperture 48 defined in bumper beam wall 32d. As illustrated, the apertures 46,48 are in registry with one another and the clip head 44a abuts mounting wall 40a.

More particularly, with additional reference to FIGURE 4A, clip fasteners 44 can be passed through access holes or apertures 50 defined in wall 40b of the absorber 40, which defines the outer side and front face of the bumper beam 32. The wall 40b, which can be referred to as the opposite wall, is spaced apart from mounting wall 40a a fixed distance along the elongated length of the absorber 40 and together the walls 40a,40b define a curvature of the absorber 40, as will be described in more detail below. Each of the access apertures 50 are sufficiently large in diameter to permit the entire clip 44, including its head portion 44a, to pass therethrough. The mounting apertures 46 defined in mounting wall 40a of the absorber 40 are appropriately sized to receive only a shaft portion 44b of the clips 44 (i.e., the head portions 44a are too large in diameter to pass therethrough). To secure the absorber 40 to the bumper beam 42, the mounting apertures 48 are aligned or placed in registry with bumper beam receiving apertures 48 defined in wall 32d of the bumper beam 32 and the clips 44 are then passed through the aligned apertures 46,48. Alternatively, the absorber 40 can be connected to the bumper beam 32 with conventional bolt and nut fasteners, though access openings in bumper beam rear wall 32e may be necessary. As illustrated in FIGURE 4, the absorber extends along all or at least a significant portion of the longitudinal length of the bumper beam 32.

The walls 40a and 40b of the absorber 40 are spaced apart from and opposite one another. Additional walls 40c,40d connect ends of walls 40a,40b to one another to form a generally hollow quadrilateral profile as shown (rectangular in the illustrated embodiment). Alternatively, the walls 40a-d can be referred to as wall portions because, as illustrated, the walls 40a-d of tube 40 form a generally continuous single wall having the aforementioned rectangular profile. The hollow profile of the absorber 40 forms the absorber as a rectangular tubular structure (i.e., not solid or uniform in thickness) along the outer side of the bumper beam 32. The absorber 40 can have a curvature generally matching that of the bumper beam 32. More particularly, the absorber 40 can have a slightly curved structure or curvature, matching that of the bumper beam 32, which includes center portion 40e disposed between the frame rails 34,36 spaced forwardly relative to end portions 40f,40g, which are formed outwardly relative to the frame rails.

At least one wall of the absorber is formed of a corrugated layer. In the illustrated embodiment, the at least one wall includes a first flexible material layer, a second flexible material layer spaced apart from the first layer, and the corrugated layer disposed between the first and second flexible material layers. More particularly, in the illustrated embodiment, each of the walls 40a-d is corrugated and has a corrugated metal foil layer flanked by flexible material layers to provide improved deflection characteristics upon occurrence of a force bearing collision. Since the walls 40a-d are generally alike, only wall 40b is further described herein. Particularly, with specific reference to FIGURE 3A, wall 40b includes an outer layer 54 separated or spaced apart from an inner layer 58 with a corrugated layer 60 provided therebetween.

The outer and inner layers 54, 58 can be formed of a lightweight, flexible (but environmentally stable) sheet material that is generally water resistant. Examples of suitable sheet materials for the layers 54,58 include those sold under the trademarks Nomex® and Mylar®, but can also include any similar material able to handle general environmental conditions, including temperature, moisture, etc., that an exterior vehicle component is likely to encounter. The corrugated layer 60 can be a corrugated metal foil (e.g., aluminum or steel foil). In one embodiment, the thickness of the inner and outer layers 54, 58 can be approximately 2 mm and the thickness of the corrugated layer 60 can be approximately 5 mm. In the illustrated embodiment of FIGURE 3A, the foil layer 60 is oriented such that elongated ribs 60a of the foil layer extend along or in the direction of the longitudinal length of the absorber 40. Though only wall 40a is described in particular detail, it is to be appreciated that the remaining walls 40b-d can be similarly constructed.

In one alternate arrangement (not shown), the corrugations of layer 60 could be oriented generally vertically such that ribs of the foil layer are generally parallel to the height of the Vehicle V. In another alternate arrangement, with reference to FIGURES 3B and 4B, the layered absorber walls can themselves be corrugated. For example, wall 40b' of absorber 40' can be a corrugated wall including a corrugated foil layer 60' flanked by flexible material layers 54',58' that generally follow the corrugations or contours of the foil layer 60'. The layers 54',58' continue to be spaced apart from one another by the foil layer 60', but are positioned in generally abutting relation with the foil layer 60' (i.e., no gap exists between the foil layer 60' and the respective flexible layers 54',58'). In most other aspects, except as described herein, the wall 40b' can be the same or similar as the wall 40b and the absorber 40' can be the same or similar absorber 40. In one exemplary construction of wall 40b' (illustrated in FIGURE 4B), an absorber formed of walls like wall 40b' can be formed of a continuous corrugated strip material that is helically wound and provides inclined corrugations or corrugation ribs that extend at an acute angle relative to the absorber's profile, as taught in U.S. Patent No. 5,680,866, expressly incorporated herein by reference. In this construction, the metal foil layer 60' and the flexible layers 54',58' are formed of substantially sequential spiral-shaped ridges 60a' and grooves 60b' along a longitudinal extent of the absorber 40'. In most other respects, the absorber 40' is the same or similar to the absorber 40. For example, absorber 40' can include apertures 46',50'for clips 44 to secure or mount the absorber 40' to a bumper beam, such as bumper beam 32 on frame rails 34,36 having clip apertures 48.

In the event of a vehicle collision, particularly where the impact force is not overwhelming, such as in a collision between a pedestrian and vehicle V having the bumper assembly 30 with the hollow tubular absorber 40 (or the absorber 40'), the absorber will crush without significantly impacting the bumper beam 30. In particular, the absorber 40 or 40' can absorb all or at least a significant portion of a relatively small impact force (e.g., an impact force resulting from a low speed collision with a pedestrian) through deformation or collapsing of the absorber. The specific crush dynamics of the absorber are largely dependent upon the precise configuration of the tubular absorber (including the corrugated layer) and the materials employed to manufacture the absorber (particularly the materials used to form the corrugated layer). In any case, the tubular absorber 40 or 40' provides a bumper assembly 30 that is very flexible in design. For example, the stiffness properties of the absorber, and therefore the overall bumper assembly 30, can easily be modified with minimal process changes (i.e., no expensive tooling changes).

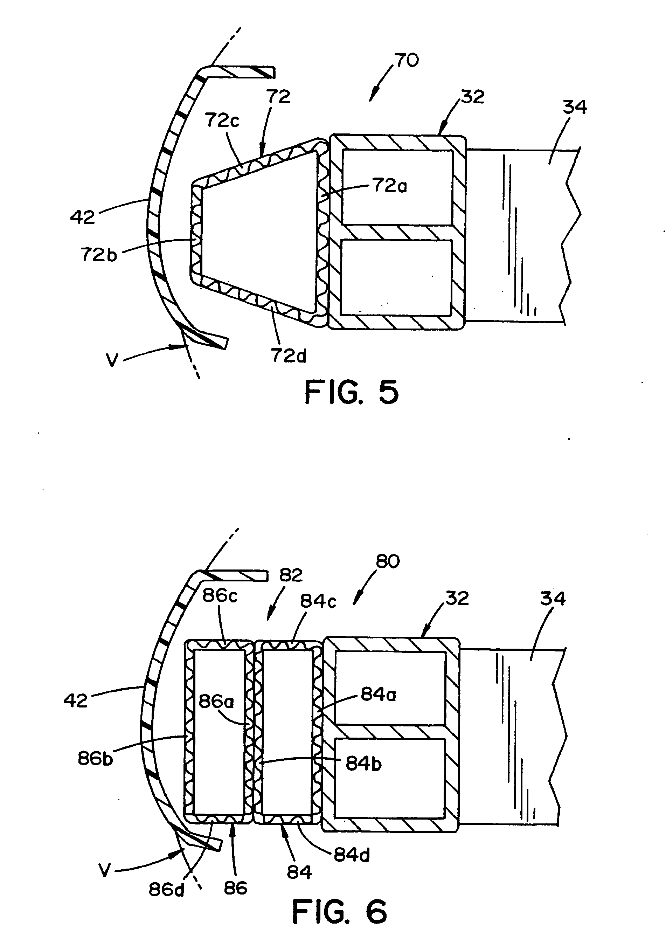

With reference now to FIGURE 5, a bumper assembly 70 according to a first alternate embodiment is shown. The bumper assembly 70 is generally the same or similar to the bumper assembly 30 (including having frame rails 34,36, bumper beam 32 and fascia 42 on vehicle V), except the absorber 40 of bumper assembly 30 is replaced with illustrated absorber 72 having a generally hollow trapezoidal profile or shape. Like absorber 40, absorber 72 remains a hollow, corrugated tubular absorberthat is secured to bumper beam 32 on a side (the outer side) of the bumper beam opposite frame rails 34,36 (only frame rail 34 shown in FIGURE 5) and between the bumper beam 32 and bumper fascia 42. The absorber 72 can be secured to the bumper beam 32 in the same manner as described in reference to the absorber 40.

The primary difference between the absorbers 40 and 72 is that absorber 72 has a hollow trapezoidal profile. That is, rear or mounting wall 72a, which is secured to the bumper beam 32, has a length different than that of spaced apart front or forward wall 72b. in the illustrated absorber 70, the mounting wall 72a has a length or height greater than that of wall 72b. Walls 72c,72d continue to connect ends of walls 72a,72b to one another but, due to the shorter length of wall 72b and its positioning relative to wall 72a, at least one of the walls 72c,72d (both in the illustrated embodiment) extends at an acute angle from wall 72a in connecting to wall 72b. Stated alternatively, at least one of the walls 72c,72d (both walls in the illustrated embodiment) extends at an obtuse angle from front wall 72b in connecting to wall 72a. All of the walls 72a-d can be formed as described in reference to wall 40b (i.e., having a corrugated metal foil layer interposed between flexible material layers) and can be formed as a single or unitary wall structure, as illustrated. Alternatively, the absorber 70 can have its walls formed as described in connection with absorber 40' and wall 40b'.

The trapezoidal shape of absorber 72, particularly the illustrated trapezoidal shape, may provide a more compact design for better fitting within a space between the fascia 42 and the bumper beam 32 and/or may provide more desirable crush characteristics in the event of a vehicle collision wherein a force is imparted to the bumper assembly 70. Like the absorber 40, the absorber 70 can include a curvature that generally matches that of the bumper beam 32 and the walls 72a-d can be formed by spaced apart material layers with a corrugated layer positioned therebetween.

With reference to FIGURE 6, a bumper assembly 80 is shown in accordance with a second alternate embodiment. The bumper assembly 80 is generally the same or similar to the bumper assembly 30 (including having frame rails 34,36, bumper beam 32 and fascia 42 on vehicle V), except absorber assembly 82 replaces the absorber 40. The absorber assembly 82 includes a plurality of hollow, corrugated tubular absorbers, including first absorber 84 and second absorber 86 in the illustrated embodiment of FIGURE 6 positioned in side-by-side relation. Like the absorber 40, the absorbers 84,86 remain elongated and hollow corrugated tubular absorbers that are together secured to the bumper beam 32 on a side (the outer side) of the bumper beam opposite the frame rails 34,36 (only frame rail 34 shown in FIGURE 6) and between the bumper beam 32 and the fascia 42. Those skilled in the art will appreciated and understand that the absorber assembly 82, including absorbers 84,86 in the illustrated embodiment, can be secured to the bumper beam 32 in generally the same manner as described in reference to absorber 40. For example, clip-type fasteners can be used to first secure absorber 84, which is immediately adjacent the bumper beam 32, and then secure absorber 86 to absorber 84. Alternatively, the absorbers 84,86 could be secured to one another and then secured to the bumper beam 32.

In most respects, except as described herein, the absorbers 84,86 can be the same or similar to the absorber 40. More particularly, like the absorber 40, each of the absorbers 84,86 has a generally hollow rectangular profile, though the profiles for absorbers 84,86 are narrower than that of the absorber 40 in the respective illustrated embodiments. As shown, the absorber 84 has a mounting wall 84a which can be mounted against the bumper beam 32 and a forward wall 84b spaced apart from the wall 84a. The wall 84b can be spaced apart from the mounting wall 84a a fixed distance along the elongated length of the absorber 84 and together the walls 84a,84b can define a curvature that generally matches that of the bumper beam 32. Relatively short connecting walls 84c,84d connect ends of the walls 84a,84b to one another. All of the walls 84a-d can be formed like wall 40b with a flexible material layer spaced apart from another flexible material layer and a corrugated foil layer disposed between the flexible material layers. The absorber 86 can be the same as the absorber 84, but mounted against absorber 84 rather than bumper beam 32. Thus, the absorber 86 can include vertical walls 86a,86b and connecting walls 86c,86d, wherein all walls 86a-d can be formed like wall 40b of FIGURE 3A (i.e., having a pair of spaced apart sheet layers with a foil corrugation provided therebetween). Alternatively, one or both of the absorbers 84,86 can be formed like the absorber 40' and have walls like the wall 40b' of absorber 40'.

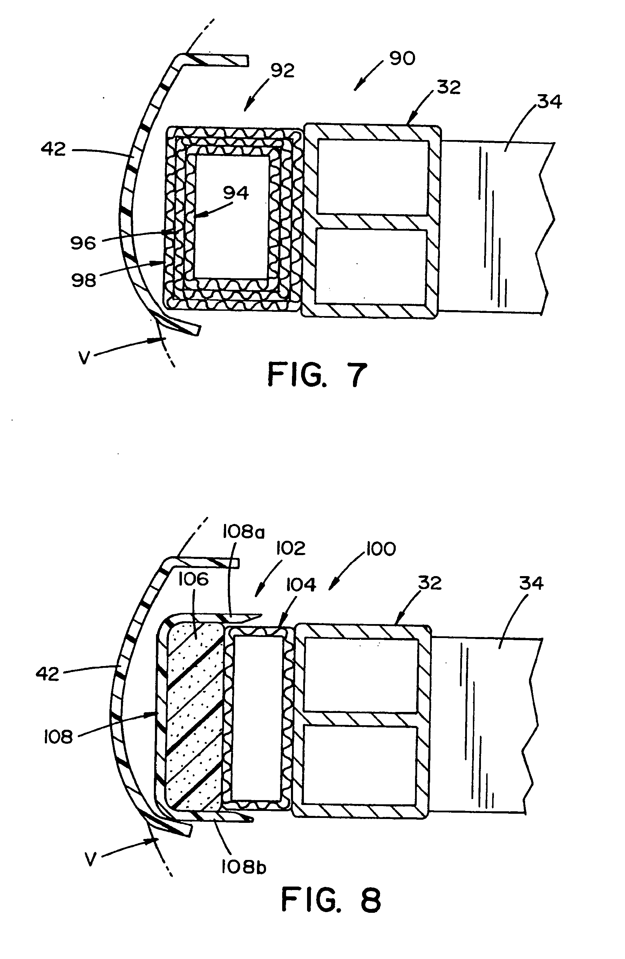

With reference to FIGURE 7, a bumper assembly 90 is shown in accordance with a third alternate embodiment. The bumper assembly 90 is similar to the bumper assembly 30 (including having frame rails 34,36, bumper beam 32 and fascia 42 on vehicle V), except absorber 40 of bumper assembly 30 is replaced with illustrated absorber 92. The absorber 92 continues to include a generally hollow, corrugated tubular profile or shape, but has stacked wall sections. That is, the absorber 92 includes first absorber 94, second absorber 96 stacked immediately on first absorber 94, and third absorber 98 stacked immediately on second absorber 96. As shown, the absorbers 94,96,98 are packaged within or on top of one another, but appear as distinct or discrete elements.

More particularly, absorber 98 is wrapped about and adjacent absorber 96 and absorber 96 is wrapped about and adjacent absorber 94. The walls of the absorbers 94,96,98 can be constructed as described in reference to wall 40b. That is, the walls forming the absorbers 94,96,98 can each include a corrugated foil layer having flexible material layers disposed on both sides of the foil layer. In most other respects, the absorber 92 is the same or similar as the absorber 40, including its mounting to bumper beam 32 and its radius or curvature matching the bumper beam 32. Alternatively, one or more of the absorbers 94,96,98 can be formed like the absorber 40' and have walls like wall 40b' In one alternate embodiment (not shown), the absorber 92 can be formed of a continuous wall that forms first absorber 94, then wraps therearound to form absorber 96 before wrapping around again to form absorber 98. In another alternate embodiment (not shown), the absorber 92 can be formed as only two absorbers (e.g., absorber 98 stacked on absorber 96 without the use of absorber 94 and/or absorber 92 formed of a continuous wall that only forms two absorbers, e.g., absorbers 96 and 98).

With reference to FIGURE 8, a bumper assembly 100 is shown in accordance with a fourth alternate embodiment. The bumper assembly 100 continues to employ the frame rails 34,36, bumper beam 32 and fascia 42 of the vehicle as described hereinabove in reference to the other embodiments; however, absorber 40 is replaced with absorber assembly 102, which includes a first absorber 104, second absorber 106 and third absorber 108. In the illustrated embodiment, first absorber 104 is a hollow, corrugated tubular absorber the same or similar to absorber 40 or absorber 40'. Second absorber 106 is a polymeric or foam absorber that is the same or similar to absorber 16 of the prior art bumper assembly 10. Third absorber 108 can be a frame structure that receives or partially receives one or both of the absorbers 104,106 therein. In the illustrated embodiment, absorber 108 is generally U-shaped in profile and fully receives foam absorber 106 and partially receives corrugated tubular absorber 104.

The absorber assembly 102 can generally have a curvature matching bumper beam 32 and can be mounted or secured to the bumper beam on a side (the outer side) of the bumper beam opposite the frame rails 34,36 and between the bumper beam 32 and the fascia 42. The attachment of the absorber assembly 102 can be as described in relation to any of the above-described embodiments and/or as generally understood by those skilled in the art. For example, though not shown in the illustrated embodiment, the absorbers 104,106 can be housed within the frame absorber 108 and leg portions 108a,108b can be secured to the bumper beam 32. In one alternate embodiment, frame absorber 108 can be employed with only tubular corrugated absorber 104 received therein. In another alternate embodiment, the absorbers 104,106 can be mounted to the bumper beam 32 without the use of U-shaped absorber 108.

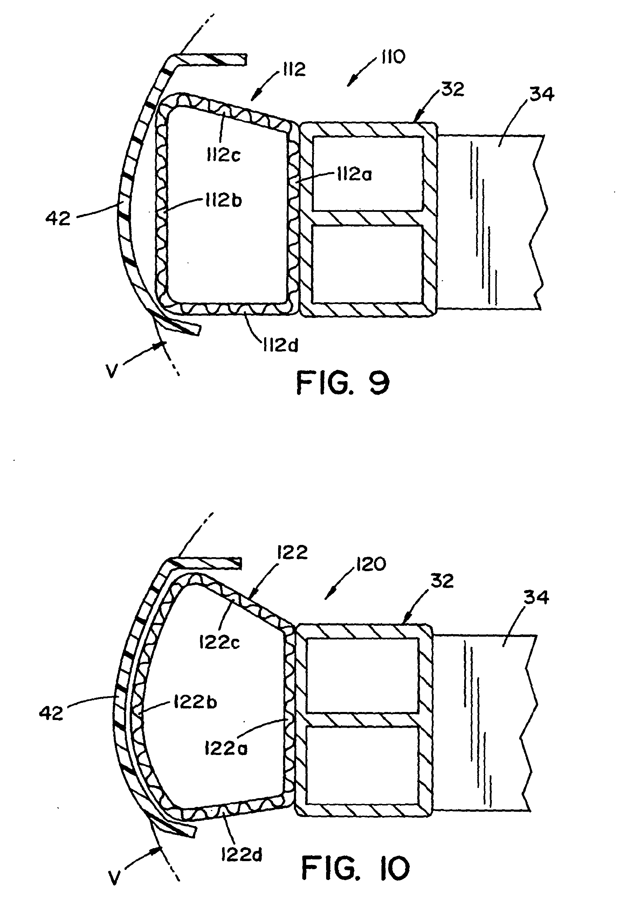

With reference to FIGURE 9, a bumper assembly 110 is shown in accordance with a fifth alternate embodiment. The bumper assembly 110 is similar to the bumper assembly 30 (including having frame rails 34,36, bumper beam 32 and fascia 42 on vehicle V), except absorber 40 of bumper assembly 30 is replaced with the illustrated absorber 112. The absorber 112 continues to include a generally hollow, corrugated tubular profile or shape. In particular, the absorber 112 has a generally hollow trapezoidal profile or shape. The absorber 112 is secured to the bumper beam 32 on a side (the outer side) of the bumper beam opposite frame rails 34,36 (only frame rail 34 is shown in FIGURE 9) and between the bumper beam 32 and bumper fascia 42. The absorber 112 can be secured to the bumper beam 32 in the same manner as described in reference to the absorber 40.

The primary difference between the absorbers 40 and 112 is that the absorber 112 has a hollow trapezoidal profile. That is, rear or mounting wall 112a, which is secured to the bumper beam, has a length different than that of spaced apart front or forward wall 112b. In the illustrated absorber 112, the mounting wall 112a has a length or height less than that of wall 112b. Walls 112c,112d continue to connect ends of walls 112a,112b to one another but, due to the longer length of wall 112b and its positioning relative to wall 112a, at least on of the walls 112c,112d extends at an obtuse angle from wall 112a in connecting to wall 112b. Stated alternatively, at least one of the walls 112c,112d extends at an acute angle from the front wall 112b to wall 112a. As illustrated, one of the connecting walls, e.g., wall 112d in the illustrated embodiment, can extend at an angle approximately normal relative to walls 112a,112b. All of the walls 112a-d can be formed as described in reference to 40b (i.e., having a corrugated metal foil layer interposed between flexible material layers or at least having a corrugated metal foil layer) and can be formed as a single or unitary wall structure, as illustrated. Alternatively, the absorber 112 can be formed like the absorber 40' with its corrugated walls (such as wall 40b')

With reference to FIGURE 10, a bumper assembly 120 is shown according to a sixth alternate embodiment. The bumper assembly 120 is generally the same or similar to the bumper assembly 30 (including having frame rails 34,36, bumper beam 32 and fascia 42 on vehicle V), except the absorber 40 of the bumper assembly 30 is replaced with illustrated absorber 122 having a generally hollow trapezoidal profile or shape and having an opposite wall 122b with a vertical curvature that generally matches a vertical curvature of the vehicle fascia 42. Like the absorber 40, absorber 122 remains a hollow, corrugated tubular absorber that is secured to bumper beam 32 on a side (the outer side) of the bumper beam opposite frame rails 34,36 (only frame rail 34 is shown in FIGURE 10) and between the bumper beam 32 and the bumper fascia 42. The absorber 122 can be secured to the bumper beam 32 in the same manner as described in reference to the absorber 40.

The primary difference between the absorbers 40 and 122 is that the absorber 122 has a hollow trapezoidal-like profile and has an opposite wall 122b that has a vertical curvature generally matching a vertical curvature of the vehicle fascia 42. More particularly, rear or mounting wall 122a, which is secured to the bumper beam 32, has a length different than that of spaced apart opposite wall 122b. In the illustrated absorber 122, the mounting wall 122a has a length or height less than that of wall 122b. Walls 122c,122d continue to connect ends of walls 122a,122b to one another but, due to the shorter length of wall 122a and its positioning relative to 122b, at least one of the walls 122c,122d extends at an obtuse angle from wall 122a (both walls 122c,122d extend at obtuse angles relative to wall 122a in the illustrated embodiment). As illustrated, the opposite wall can be positioned closely adjacent (or can even be in engagement with) the vehicle fascia 42. All of the walls 122a-d can be formed as described in reference to the wall 40b (i.e., having a corrugated metal foil layer interposed between flexible material layers) and can be formed as a single or unitary wall structure, as illustrated. Alternatively, instead of being formed like absorber 40, the absorber 122 can be formed like the absorber 40' having corrugated walls (such as wall 40b')

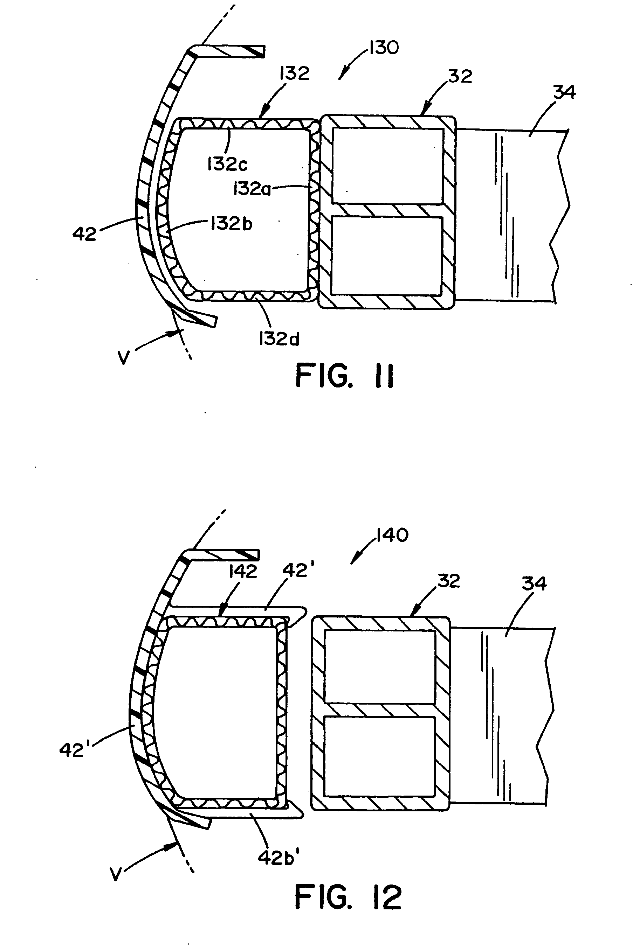

With reference to FIGURE 11, a bumper assembly 130 is shown according to a seventh alternate embodiment. The bumper assembly 130 is generally the same or similar to the bumper assembly 30 (including having frame rails 34,36, bumper beam 32 and fascia 42 on vehicle V), except the absorber 40 of the bumper assembly 30 is replaced with illustrated absorber 132 having an opposite wall 132b with a vertical curvature that generally matches a vertical curvature of the vehicle fascia 42. Like the absorber 40, absorber 132 remains a hollow, corrugated tubular absorber that is secured to the bumper beam 32 on a side (the outer side) of the bumper beam opposite frame rails 34,36 (only frame rail 34 is shown in FIGURE 11) and between the bumper beam 32 and the bumper fascia 42. The absorber 132 can be secured to the bumper beam 32 in a same manner as described in reference to the absorber 40.

The primary difference between the absorbers 40 and 132 is that the absorber 132 has an opposite wall 132b that has a vertical curvature generally matching a vertical curvature of the vehicle fascia 42. Like the absorber 40, the absorber 132 includes a rear or mounting wall 132a that is secured to the bumper beam 32. The opposite wall 132b, which has a curvature generally matching that of the fascia 42, is spaced apart from the mounting wall 132a and connected therewith by a pair of connecting walls 132c,132d, both of which extend from the mounting wall 132a in a direction approximately normal relative to the mounting wall 132a. As illustrated, the opposite wall 132b can be positioned closely adjacent (or can even be in engagement with) the vehicle fascia 42. All of the walls 132a-d can be formed as described in reference to the wall 40b (i.e., having a corrugated metal foil layer interposed between flexible material layers) and can be formed as a single or unitary wall structure, as illustrated. Alternatively, the absorber 132 can be formed similar to the absorber 40' having corrugated walls (such as wall 40b').

With reference to FIGURE 12, a bumper assembly 140 is shown according to an eight alternate embodiment. The bumper assembly 140 is generally the same or similar to the bumper assembly 30 (including having frame rails 34,36, bumper beam 32 and fascia 42 on vehicle V), except the absorber 40 of the bumper assembly 30 is replaced with illustrated absorber 142 which is mounted to bumper fascia 42'. More particularly, bumper fascia 42' of FIGURE 12 includes integrally molded holding arms 42a',42b' between which the tubular absorber 142 is received and positioned in close space relation relative to the bumper beam 32. As illustrated, the absorber 142 can be adjacent and in engagement with the fascia 42'. In all other respects, the bumper absorber 142 can be the same or similar to the bumper absorber 132. Alternatively, the absorber 142 could be secured to a bumper fascia by any conventional mounting arrangement (e.g., glue). It is contemplated that any of the absorbers described herein could be alternately mounted to a front fascia as described in reference to absorber 142 if so desired.

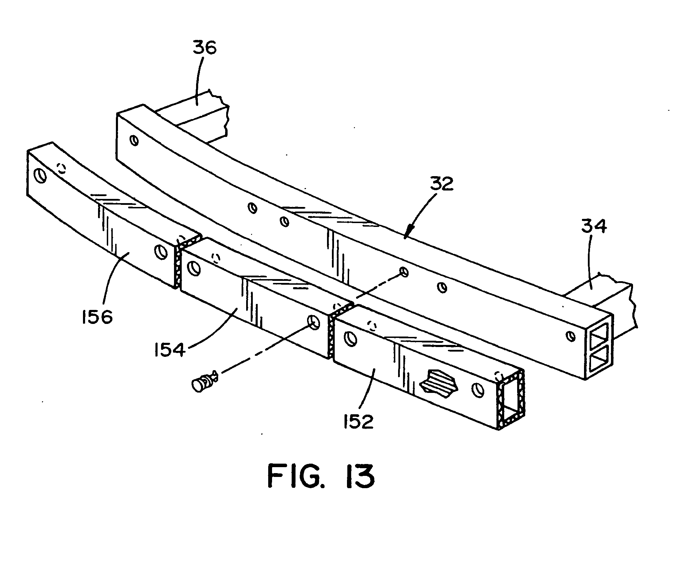

With reference to FIGURE 13, an alternate mounting arrangement is depicted for mounting a plurality of tubular corrugated absorbers to the bumper beam 32. More particularly, the mounting arrangement depicted in FIGURE 13 includes a plurality of tubular absorbers 152,154,156 positioned in end-to-end or serial relation on the bumper beam 32. The absorbers 152,154,156 can each be any of the absorbers described herein and/or can be mixed and matched. For example, the absorber 152 can be like the absorber 132, but absorbers 154 and 156 need not be identical to the absorber 152. Moreover, the particular stiffness properties of each of the absorbers 152,154,156 can vary relative to one another.

With respect to any of the absorbers disclosed herein, it is to be appreciated by those skilled in the art that any of such absorbers (e.g., absorbers 40 and 40') can be provided with only one of the inner and outer layers or without both of the inner and outer layers. In one alternate embodiment (not shown), the corrugated wall or walls of the absorber are formed without one or both of the flexible material layers. In another alternate embodiment (not shown) the corrugated wall or walls of the absorber are formed with one or both of the flexible material layers, but one or both of the flexible material layers formed with the corrugated wall or walls are peeled off or from the absorber subsequent to forming absorber (i.e., post-forming).

It will be appreciated that various of the above-disclosed and otherfeatures and functions, or alternatives thereof, may be desirably combined into many other different systems or applications. Also that various presently unforeseen or unanticipated alternatives, modifications, variations or improvements therein may be subsequently made by those skilled in the art which are also intended to be encompassed by the following claims.
A vehicle bumper assembly includes a bumper beam extending laterally across a vehicle at one end of the vehicle and a tubular absorber having a closed hollow profile including at least one wall formed of a corrugated layer. The tubular absorber is mounted to the bumper beam on an outer side thereof.

## Claims

1. A vehicle bumper assembly, comprising:
a bumper beam (32) extending laterally across a vehicle (V) at one end of the vehicle (V); and a tubular absorber (40; 72; 84; 98; 104; 112; 122; 132; 142; 152, 154, 156) having a closed hollow profile including at least one wall (40a-40d; 72a-72d; 84a-84d, 86a-86d; 112a-112d; 122a-122d; 132a-132d) formed of a corrugated layer (60), said tubular absorber mounted to and extending along said bumper beam (32) on an outer side thereof,
**characterized in that**
said at least one wall includes a first flexible material layer (54) adjacent said corrugated layer (60),
said at least one wall further includes a second flexible material layer (58) adjacent said corrugated layer (60) and spaced apart from said first flexible material layer (54) with said corrugated layer (60) disposed between said first and second layers (54, 58), and
the first and second flexible material layers (54, 58) are formed of flexible sheet material that is environmentally stable and water resistant.

2. The vehicle bumper assembly of claim 1 wherein said hollow tubular absorber (40; 72; 84; 112; 122; 132) includes a mounting wall (40a; 72a; 84a; 112a; 122a; 132a) secured to said bumper beam (32), an opposite wall (40b; 72b; 84b; 112b; 122b; 132b) spaced apart from said mounting wall and spaced apart connecting walls (40c, 40d; 72c, 72d; 84c, 84d; 112c, 112d; 122c, 122d; 132c, 132d) extending between said mounting wall and said forward wall.

3. The vehicle bumper assembly of claim 2 wherein said tubular absorber has a quadrilateral profile and said at least one wall includes each of said mounting wall, said forward wall and said connecting walls.

4. The vehicle bumper assembly of claim 3 wherein said tubular absorber (72; 112; 122) has a trapezoidal profile including said mounting wall (72a; 112a; 122a) secured to said bumper beam (32), said opposite wall (72b; 112b; 122b) having a length different than that of said mounting wall (72a; 112a; 122a) and being spaced apart from said mounting wall, and said pair of connecting walls (72c, 72d; 112c, 112d; 122c, 122d) extending from said mounting wall to said forward wall.

5. The vehicle bumper assembly of claim 3 wherein said opposite wall (122b; 132b) has a vertical curvature that generally matches a vertical curvature of a fascia (42) beneath which said tubular absorber (122; 132) is positioned, said opposite wall (122b; 132b) positioned closely adjacent said fascia (42).

6. The vehicle bumper assembly of any one of claims 1 to 5 wherein said corrugated layer (60) is formed of a corrugated metal foil.

7. The vehicle bumper assembly of any one of claims 1 to 6 wherein said absorber is secured to said bumper beam with blind fastener clips (44).

8. The vehicle bumper assembly of any one of claims 1 to 7 wherein said bumper beam (32) and said tubular absorber (40) secured thereto have matching longitudinal curvatures.

9. The vehicle bumper assembly of any one of claims 1 to 8 wherein said bumper beam (32) is formed of extruded aluminum and has a hollow, closed profile.

10. The vehicle bumper assembly of claim 1 further including a second tubular absorber (86; 96) having a closed hollow profile including at least one wall formed of a corrugated layer, said second tubular absorber (86; 96) one of (a) mounted to said tubular absorber (84) on a side opposite said bumper beam (32) or (b) wrapped about and positioned adjacent a second tubular absorber (94) having a closed hollow profile and including at least one wall formed of a corrugated layer.

11. The vehicle bumper assembly of claim 1 further including a U-shaped absorber (108) secured to said bumper beam (32) on said outer side with said tubular absorber (104) received within said U-shaped absorber (108), said hollow tubular absorber (104) mounted to said bumper beam (32) by said U-shaped absorber (108).

12. The vehicle bumper assembly of claim 1 further including at least one of (i) a polymer absorber (106) mounted adjacent said tubular absorber (104) on a side of said hollow tubular absorber (104) opposite said bumper beam (32) and (ii) a U-shaped absorber (108) secured to said bumper beam (32) on said outer side with said tubular absorber (104) at least partially received within said U-shaped absorber (108), said polymer absorber (106) received within said U-shaped absorber (108) when both said polymer (106) and said U-shaped absorbers (108) are included with said tubular absorber (104).

13. The vehicle bumper assembly of claim 1, wherein the bumper beam (32) is connected to one end of a pair of spaced apart vehicle frame rails (34, 36); and the corrugated tubular absorber has at least a corrugated metal foil layer (60).

14. The vehicle bumper assembly of claim 13 further including a bumper fascia (42') having integrally molded holding arms (42a', 42b') between which said tubular absorber (142) is received in close spaced relation to said bumper beam (32).

15. The vehicle bumper assembly of claim 1, wherein the vehicle bumper assembly is mounted to frame rails (34, 36) of the vehicle (V) on the front or rear end of the vehicle (V), the tubular absorber (40; 72; 84; 98; 104; 112; 122; 132; 152, 154, 156) being formed of an energy absorbing tube disposed on an outer face of said bumper beam (32) for absorbing energy when said tube is deformed due to an impact force, said tube including a corrugated metal foil layer (60).

16. The vehicle bumper assembly of claim 15 wherein said energy absorbing tube is formed of a continuous wall formed by said corrugated metal layer (60) with the environmentally stable flexible material layers (54, 58) flanking said corrugated metal foil layer (60).

17. The vehicle bumper assembly of claim 15 wherein said energy absorbing tube extends along a significant portion of a longitudinal length of said bumper beam (32).

18. The vehicle bumper assembly of claim 1 wherein the first and second flexible material layers (54, 58) are flat layers.

## Patentansprüche

1. Fahrzeugstoßfängeranordnung, umfassend:
einen Stoßfängerträger (32), der sich quer zu einem Fahrzeug (V) an einem Ende des Fahrzeugs (V) erstreckt; sowie einen rohrförmigen Absorber (40; 72; 84; 98; 104; 112; 122; 132; 142; 152, 154, 156) mit einem geschlossenen Hohlprofil, das zumindest eine Wand (40a - 40d; 72a - 72d; 84a - 84d, 86a - 86d; 112a - 112d; 122a - 122d; 132a - 132d) enthält, die aus einer gewellten Schicht (60) gebildet ist, wobei der rohrförmige Absorber entlang dem Stoßfängerträger (32) an dessen Außenseite angebracht ist und sich entlang diesem erstreckt,
**dadurch gekennzeichnet, dass**
die zumindest eine Wand eine erste flexible Materialschicht (54) enthält, die der gewellten Schicht (60) benachbart ist,
wobei die zumindest eine Wand ferner eine zweite flexible Materialschicht (58) enthält, die der gewellten Schicht (60) benachbart ist und mit Abstand von der ersten flexiblen Schicht (54) angeordnet ist, wobei die gewellte Schicht (60) zwischen der ersten und der zweiten Schicht (54, 58) angeordnet ist, und
die erste und die zweite flexible Materialschicht (54, 58) aus einem flexiblen Blattmaterial gebildet sind, das umweltstabil und wasserbeständig ist.

2. Fahrzeugstoßfängeranordnung nach Anspruch 1, worin der hohle rohrförmige Absorber (40; 72; 84; 112; 122; 132) eine Halterungswand (40a; 72a; 84a; 112a; 122a; 132a), die an dem Stoßfängerträger (32) gesichert ist, eine entgegengesetzte Wand (40b; 72b; 84b; 112b; 122b; 132b), die mit Abstand von der Halterungswand angeordnet ist, sowie mit Abstand voneinander angeordnete Verbindungswände (40c, 40d; 72c, 72d; 84c, 84d; 112c, 112d; 122c, 122d; 132c, 132d), die sich zwischen der Halterungswand und der vorderen Wand erstrecken, enthält.

3. Fahrzeugstoßfängeranordnung nach Anspruch 2, worin der rohrförmige Absorber ein vierseitiges Profil hat und zumindest eine Wand jede der Halterungswand, der vorderen Wand und der Verbindungswände enthält.

4. Fahrzeugstoßfängeranordnung nach Anspruch 3, worin der rohrförmige Absorber (72; 112; 122) ein trapezartiges Profil hat, das die Halterungswand (72a; 112a; 122a), die an dem Stoßfängerträger (32) gesichert ist, die entgegengesetzte Wand (72b; 112b; 122b), deren Länge sich von jener der Halterungswand (72a; 112a; 122a) unterscheidet und die mit Abstand von der Halterungswand angeordnet ist, sowie das Paar von Verbindungswänden (72c, 72d; 112c, 112d; 122c, 122d), das sich von der Halterungswand zu der vorderen Wand erstreckt, enthält.

5. Fahrzeugstoßfängeranordnung nach Anspruch 3, worin die entgegengesetzte Wand (122b; 132b) eine vertikale Krümmung hat, die allgemein an eine vertikale Krümmung einer Abdeckung (42) angepasst ist, unter der der rohrförmige Absorber (122; 132) angeordnet ist, wobei die entgegengesetzte Wand (122b; 132b) nahe benachbart der Abdeckung (42) angeordnet ist.

6. Fahrzeugstoßfängeranordnung nach einem der Ansprüche 1 bis 5, worin die gewellte Schicht (60) aus einer gewellten Metallfolie gebildet ist.

7. Fahrzeugstoßfängeranordnung nach einem der Ansprüche 1 bis 6, worin der Absorber an dem Stoßfängerträger mit Blindbefestigungsklemmen (44) gesichert ist.

8. Fahrzeugstoßfängeranordnung nach einem der Ansprüche 1 bis 7, worin der Stoßfängerträger (32) und der daran gesicherte rohrförmige Absorber (40) zueinander passende Längskrümmungen aufweisen.

9. Fahrzeugstoßfängeranordnung nach einem der Ansprüche 1 bis 8, worin der Stoßfängerträger (32) aus extrudiertem Aluminium gebildet ist und ein hohles geschlossenes Profil hat.

10. Fahrzeugstoßfängeranordnung nach Anspruch 1, die ferner einen zweiten rohrförmigen Absorber (86; 96) enthält, der ein geschlossenes Hohlprofil hat, das zumindest eine Wand aufweist, die aus einer gewellten Schicht gebildet ist, wobei der zweite rohrförmige Absorber (86; 96) (a) an dem rohrförmigen Absorber (84) an einer dem Stoßfängerträger (32) gegenüberliegenden Seite angebracht ist oder (b) um einen zweiten rohrförmigen Absorber (94), der ein geschlossenes Hohlprofil hat und zumindest eine Wand enthält, die aus einer gewellten Schicht gebildet ist, herumgewickelt und dieser benachbart angeordnet ist.

11. Fahrzeugstoßfängeranordnung nach Anspruch 1, die ferner einen U-förmigen Absorber (108) enthält, der an dem Stoßfängerträger (32) an der Außenseite mit dem in dem U-förmigen Absorber (108) aufgenommenen rohrförmigen Absorber (104) gesichert ist, wobei der hohle rohrförmige Absorber (104) durch den U-förmigen Absorber (108) an dem Stoßfängerträger (82) angebracht ist.

12. Fahrzeugstoßfängeranordnung nach Anspruch 1, die ferner zumindest (i) einen Polymerabsorber (106), der benachbart dem rohrförmigen Absorber (104) an einer dem Stoßfängerträger (32) gegenüberliegenden Seite des hohlen rohrförmigen Absorbers (104) angebracht ist, oder/und (ii) einen U-förmigen Absorber (108), der an dem Stoßfängerträger (32) an der Außenseite mit dem zumindest teilweise innerhalb des U-förmigen Absorbers (108) aufgenommenen rohrförmigen Absorber (104) gesichert ist, wobei der Polymerabsorber (106) in dem U-förmigen Absorber (108) aufgenommen ist, wenn sowohl der Polyer (106)- als auch der U-förmige Absorber (108) in dem rohrförmigen Absorber (104) enthalten sind.

13. Fahrzeugstoßfängeranordnung nach Anspruch 1, worin der Stoßfängerträger (32) mit einem Ende eines Paars von mit Abstand voneinander angeordneten Fahrzeugrahmenschienen (34, 36) verbunden ist; und der gewellte rohrförmige Absorber zumindest eine gewellte Metallfolienschicht (60) aufweist.

14. Fahrzeugstoßfängeranordnung nach Anspruch 13, die ferner eine Stoßfängerabdeckung (42') enthält, die einstückig angeformte Haltearme (42a', 42b') aufweist, zwischen denen der rohrförmige Absorber (142) mit engem Abstand zu dem Stoßfängerträger (32) aufgenommen ist.

15. Fahrzeugstoßfängeranordnung nach Anspruch 1, worin die Fahrzeugstoßfängeranordnung an Rahmenschienen (34, 36) des Fahrzeugs (V) am Vorder- oder Hinterende des Fahrzeugs (V) angebracht ist, wobei der rohrförmige Absorber (40; 72; 84; 98; 104; 112; 122; 132; 152, 154, 156) aus einem energieabsorbierenden Rohr ausgebildet ist, das an einer Außenfläche des Stoßfängerträgers (32) angeordnet ist, um Energie zu absorbieren, wenn das Rohr aufgrund einer Aufprallkraft verformt wird, wobei das Rohr eine gewellte Metallfolienschicht (60) enthält.

16. Fahrzeugstoßfängeranordnung nach Anspruch 15, worin das energieabsorbierende Rohr aus einer durchgehenden Wand gebildet ist, die aus der gewellten Metallschicht (60) gebildet ist, wobei die umweltstabilen flexiblen Materialschichten (54, 58) die gewellte Metallfolienschicht (60) flankieren.

17. Fahrzeugstoßfängeranordnung nach Anspruch 15, worin sich das energieabsorbierende Rohr entlang einem signifikanten Abschnitt einer Längslänge des Stoßfängerträgers (32) erstreckt.

18. Fahrzeugstoßfängeranordnung nach Anspruch 1, worin die ersten und zweiten flexiblen Materialschichten (54, 58) flache Schichten sind.

## Revendications

1. Assemblage de pare-chocs de véhicule, comportant :
une poutre de pare-chocs (32) s'étendant latéralement à travers un véhicule (V) à une extrémité du véhicule (V), et un absorbeur tubulaire (40 ; 72 ; 84 ; 98 ; 104 ; 112 ; 122 ; 132 ; 142 ; 152, 154, 156) ayant un profil creux fermé incluant au moins une paroi (40a à 40d ; 72a à 72d ; 84a à 84d ; 86a à 86d ; 112a à 112d ; 122a à 122d ; 132a à 132d) formée d'une couche ondulée (60), ledit absorbeur tubulaire étant monté sur un côté extérieur de ladite poutre de pare-chocs (32) et s'entendant le long de celle-ci,
**caractérisé en ce que**
ladite au moins une paroi inclut une première couche de matériau souple (54) adjacente à ladite couche ondulée (60),
ladite au moins une paroi inclut en outre une seconde couche de matériau souple (58) adjacente à ladite couche ondulée (60) et espacée de ladite première couche de matériau souple (54), ladite couche ondulée (60) étant disposée entre lesdites première et seconde couches (54, 58), et
les première et seconde couches de matériau souple (54, 58) sont formées d'un matériau de feuille souple qui est stable dans l'environnement et résistant à l'eau.

2. Assemblage de pare-chocs de véhicule selon la revendication 1, dans lequel ledit absorbeur tubulaire creux (40 ; 72 ; 84 ; 112 ; 122 ; 132) inclut une paroi de montage (40a ; 72a ; 84a ; 112a ; 122a ; 132a) fixée sur ladite poutre de pare-chocs (32), une paroi opposée (40b ; 72b ; 84b ; 112b ; 122b ; 132b) espacée de ladite paroi de montage, et des parois de liaison espacées (40c, 40d ; 72c, 72d ; 84c, 84d ; 112c, 112d ; 122c, 122d ; 132c, 132d) s'étendant entre ladite paroi de montage et ladite paroi avant.

3. Assemblage de pare-chocs de véhicule selon la revendication 2, dans lequel ledit absorbeur tubulaire a un profil quadrilatéral et ladite au moins une paroi inclut chaque paroi parmi ladite paroi de montage, ladite paroi avant et lesdites parois de liaison.

4. Assemblage de pare-chocs de véhicule selon la revendication 3, dans lequel ledit absorbeur tubulaire (72 ; 112 ; 122) a un profil trapézoïdal incluant ladite paroi de montage (72a ; 112a ; 122a) fixée sur ladite poutre de pare-chocs (32), ladite paroi opposée (72b ; 112b ; 122b) ayant une longueur différente de celle de ladite paroi de montage (72a ; 112a ; 122a) et espacée de ladite paroi de montage, et ladite paire de parois de liaison (72c, 72d ; 112c, 112d ; 122c, 122d) s'étendant de ladite paroi de montage à ladite paroi avant.

5. Assemblage de pare-chocs de véhicule selon la revendication 3, dans lequel ladite paroi opposée (122b ; 132b) a une courbure verticale qui correspond généralement à une courbure verticale d'un carénage (42) sous lequel ledit absorbeur tubulaire (122 ; 132) est positionné, ladite paroi opposée (122b ; 132b) étant positionnée étroitement adjacente audit carénage (42).

6. Assemblage de pare-chocs de véhicule selon l'une quelconque des revendications 1 à 5, dans lequel ladite couche ondulée (60) est formée d'un film métallique ondulé.

7. Assemblage de pare-chocs de véhicule selon l'une quelconque des revendications 1 à 6, dans lequel ledit absorbeur est fixé sur ladite poutre de pare-chocs à l'aide d'attaches de fixation aveugle (44).

8. Assemblage de pare-chocs de véhicule selon l'une quelconque des revendications 1 à 7, dans lequel ladite poutre de pare-chocs (32) et ledit absorbeur tubulaire (40) fixé sur celle-ci ont des courbures longitudinales correspondantes.

9. Ensemble de pare-chocs de véhicule selon l'une quelconque des revendications 1 à 8, dans lequel ladite poutre de pare-chocs (32) est formée d'aluminium extrudé et a un profil creux fermé.

10. Assemblage de pare-chocs de véhicule selon la revendication 1, incluant également un second absorbeur tubulaire (86 ; 96) ayant un profil creux fermé incluant au moins une paroi formée d'une couche ondulée, ledit second absorbeur tubulaire (86 ; 96) étant (a) monté sur ledit absorbeur tubulaire (84) sur un côté opposé à ladite poutre de pare-chocs (32) ou (b) enroulé autour d'un second absorbeur tubulaire (94) et positionné adjacent à celui-ci, ledit second absorbeur (94) ayant un profil creux fermé et incluant au moins une paroi formée d'une couche ondulée.

11. Assemblage de pare-chocs de véhicule selon la revendication 1, incluant en outre un absorbeur en forme de U (108) fixé sur ladite poutre de pare-chocs (32) sur ledit côté extérieur, ledit absorbeur tubulaire (104) étant reçu à l'intérieur dudit absorbeur en forme de U (108), ledit absorbeur tubulaire creux (104) étant monté sur ladite poutre de pare-chocs (32) par l'intermédiaire dudit absorbeur en forme de U (108).

12. Assemblage de pare-chocs de véhicule selon la revendication 1, incluant également au moins un absorbeur parmi (i) un absorbeur en polymère (106) monté adjacent audit absorbeur tubulaire (104) sur un côté dudit absorbeur tubulaire creux (104) opposé à ladite poutre de pare-chocs (32), et (ii) un absorbeur en forme de U (108) fixé sur ladite poutre de pare-chocs (32) sur ledit côté extérieur, ledit absorbeur tubulaire (104) étant au moins partiellement reçu à l'intérieur dudit absorbeur en forme de U (108), ledit absorbeur en polymère (106) étant reçu à l'intérieur dudit absorbeur en forme de U (108) lorsque lesdits absorbeurs en polymère (106) et en forme de U (108) sont tous les deux inclus avec ledit absorbeur tubulaire (104).

13. Assemblage de pare-chocs de véhicule selon la revendication 1, dans lequel la poutre de pare-chocs (32) est reliée à une extrémité d'une paire de rails de châssis de véhicule espacés (34, 36), et l'absorbeur tubulaire ondulé a au moins une feuille de film métallique ondulée (60).

14. Assemblage de pare-chocs de véhicule selon la revendication 13, incluant en outre un carénage de pare-chocs (42') ayant des bras de support moulés d'un seul tenant (42a', 42b') entre lesquels ledit absorbeur tubulaire (142) est reçu dans une disposition faiblement espacée par rapport à ladite poutre de pare-chocs (32).

15. Assemblage de pare-chocs de véhicule selon la revendication 1, dans lequel l'ensemble de pare-chocs de véhicule est monté sur des rails de châssis (34, 36) du véhicule (V) sur l'extrémité avant ou arrière du véhicule (V), l'absorbeur tubulaire (40 ; 72 ; 84 ; 98 ; 104 ; 112 ; 122 ; 132 ; 152, 154, 156) étant formé d'un tube absorbeur d'énergie disposé sur une face extérieure de ladite poutre de pare-chocs (32) pour absorber de l'énergie lorsque ledit tube est déformé en raison d'une force d'impact, ledit tube incluant une feuille de film métallique ondulée (60).

16. Assemblage de pare-chocs de véhicule selon la revendication 15, dans lequel ledit tube absorbeur d'énergie est formé d'une paroi continue formée par ladite couche métallique ondulée (60), les couches de matériau souple stable dans l'environnement (54, 58) étant situées de part et d'autre de ladite couche de film métallique ondulée (60).

17. Assemblage de pare-chocs de véhicule selon la revendication 15, dans lequel ledit tube absorbeur d'énergie s'étend le long d'une partie importante d'une longueur longitudinale de ladite poutre de pare-chocs (32).

18. Assemblage de pare-chocs de véhicule selon la revendication 1, dans lequel les première et seconde couches de matériau souple (54, 58) sont des couches planes.
